(19) Europäisches Patentamt
European Patent Office
Office européen des brevets

(11) **EP 3 376 004 B1**

(12) **EUROPEAN PATENT SPECIFICATION**

(45) Date of publication and mention
of the grant of the patent:
**10.08.2022   Bulletin 2022/32**

(21) Application number: **18161446.2**

(22) Date of filing: **13.03.2018**

(51) International Patent Classification (IPC):
**F02C 7/262** *(2006.01)*

(52) Cooperative Patent Classification (CPC):
**F02C 7/262;** F05D 2270/092; F23N 2231/06

(54) **METHOD OF DETECTING FLAMEOUT IN A COMBUSTOR AND TURBINE SYSTEM**

VERFAHREN ZUR ERKENNUNG VON FLAMMABRISS IN EINER BRENNKAMMER UND TURBINENANLAGE

PROCÉDÉ DE DETECTION D'EXTINCTION DE FLAMME DANS UNE CHAMBRE DE COMBUSTION ET SYSTÈME DE TURBINE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **14.03.2017   IT 201700028052**

(43) Date of publication of application:
**19.09.2018   Bulletin 2018/38**

(73) Proprietor: **General Electric Company**
**Schenectady, NY 12345 (US)**

(72) Inventors:
• **ASTI, Antonio**
  **50127 Florence (IT)**
• **PACI, Mariateresa**
  **50127 Florence (IT)**
• **LOSAPIO, Miriam**
  **50127 Florence (IT)**
• **TONNO, Giovanni**
  **50127 Florence (IT)**

(74) Representative: **Novagraaf Group**
**Chemin de l'Echo 3**
**1213 Onex/ Geneva (CH)**

(56) References cited:
CA-A- 1 088 181     US-A1- 2016 195 025
US-B1- 6 442 943

## Description

TECHNICAL FIELD

The subject matter disclosed herein correspond to methods of detecting flameout in a combustor and to turbine systems.

BACKGROUND ART

During operation of a turbine system a rare event called "flameout" may occur; "flameout" means that the flame of the combustor of the turbine system completely extinguishes.

Flameout is a very dangerous event; therefore, it should be detected as soon as it occurs and possibly corrective measures should be taken.

According to the prior art, at least one flame detector is located just inside the combustion chamber of the combustor of the turbine system.

Such flame detectors are designed to sense directly the presence of a flame so they are able to provide a very short response time.

Such flame detectors are subject to very hard operating conditions; this creates problems both from the construction and the operation point of view.

US 6 442 943 B1 describes a method and an apparatus for detecting flameout in a combustor of a gas turbine engine comprising a compressor upstream and a gas turbine downstream said combustor. The method uses signals of a gas generator speed, of an engine inlet temperature and of a rate of change in the gas generator speed resp. of a deceleration rate of the gas generator for flameout detection and comprises the steps of detecting the deceleration rate of the gas generator and of comparing the detected deceleration rate in a logic device with a threshold prediction. The threshold prediction is scheduled as a function of the gas generator speed and of the engine inlet temperature.

It would be desirable to improve the prior art.

SUMMARY

Therefore, the Inventors have thought of indirectly sensing the presence of the flame, in particular through operating parameters of the turbine system. The claimed invention relates to the subject matter set forth in the claims.

Embodiments of the subject matter disclosed herein relate to methods of detecting flameout in a combustor of a turbine system.

Other embodiments of the subject matter disclosed herein relate to turbine systems.

A method of detecting a flameout in a combustor of a turbine system according to claim 1 and a turbine system according to claim 13 comprising a digital signal processing unit adapted to carry out the method of claim 1 describe the subject matter for which patent protection is sought.

It is to be noted that the present invention has been conceived for application in the field of "Oil & Gas".

BRIEF DESCRIPTION OF DRAWINGS

The accompanying drawings, which are incorporated herein and constitute an integral part of the present specification, illustrate exemplary embodiments of the present invention and, together with the detailed description, explain these embodiments. In the drawings:

Fig. 1 shows a schematic diagram of a turbine system using a flameout detection method according to the subject matter disclosed herein; and
Fig. 2 shows a flowchart of an embodiment of a flameout detection method according to the subject matter disclosed herein.

DETAILED DESCRIPTION

The following description of exemplary embodiments refers to the accompanying drawings.

The following description does not limit the invention. Instead, the scope of the invention is defined by the appended claims.

Reference throughout the specification to "one embodiment" or "an embodiment" means that a particular feature, structure, or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

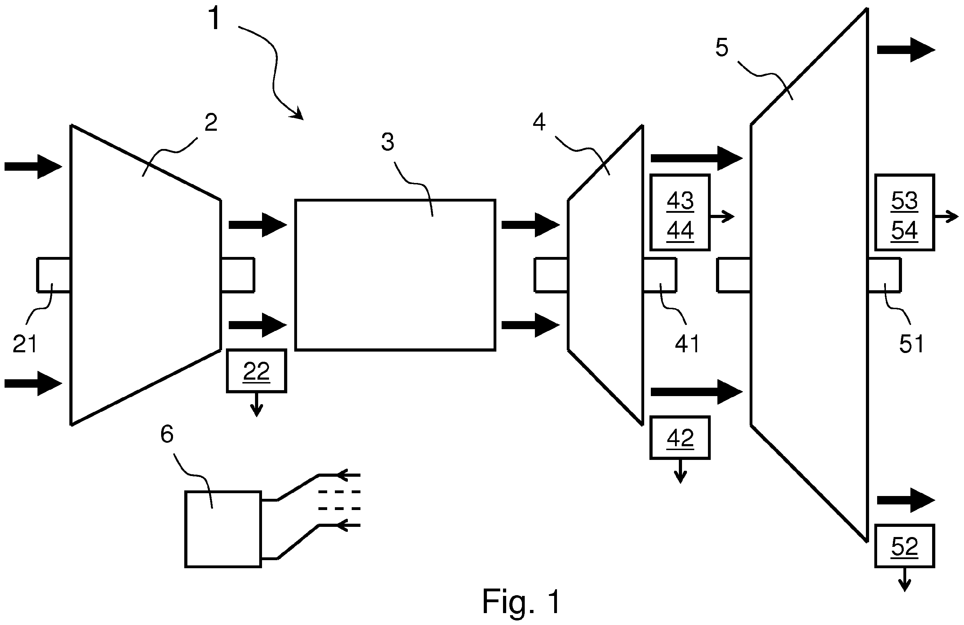

Fig. 1 shows a turbine system 1 comprising: a compressor 2, a combustor 3, a first turbine 4 (that may be called "high-pressure turbine"), a second turbine 5 (that may be called "low-pressure turbine"), and a digital signal processing unit 6. Compressor 2 has an own shaft 21; the first turbine 4 has an own shaft 41; the second turbine 5 has an own shaft 51 (mechanically disconnected from shaft 41). An outlet of compressor 2 is fluidly connected to an inlet of combustor 3; an outlet of combustor 3 is fluidly connected to an inlet of turbine 4; an outlet of turbine 4 is fluidly connected to an inlet of turbine 5. It is to be noted that combustor 3 has at least another inlet (not shown in Fig. 1), for example a fuel inlet.

Furthermore, turbine system 1 comprises: a pressure detector 22 measuring pressure, for example the average pressure, at the outlet of compressor 2 (corresponding substantially to the inlet of combustor 3), a temperature detector 42 measuring temperature, for example the average temperature, at the outlet of turbine 4 (corresponding substantially to the inlet of turbine 5), a temperature detector 52 measuring temperature, for example the average temperature, at the outlet of turbine 5, an angular speed detector 43 measuring angular speed of shaft 41, an angular acceleration detector 44 measuring acceleration speed of shaft 41, an angular speed detector 53 measuring angular speed of shaft 51, an angular acceleration detector 54 measuring acceleration speed of shaft 51.

According to a typical embodiment, combustor 3 comprises a plurality of burners arranged annularly.

According to embodiments alternative to the one of Fig. 1, the turbine system may comprise more than one compressor (for example serially connected) and/or one or two or three or more turbines (for example serially connected).

Digital signal processing unit 6 is electrically connected to detectors 22, 42, 43, 44, 52, 53, 54 and receives measure signals from these detectors.

In order to detect flameout of combustor 3, the following steps may be carried out:

A) measuring angular acceleration of a shaft of a turbine;

B) calculating a flameout indicator as a function of the angular acceleration; and

C) carrying out a comparison between the flameout indicator and a threshold.

Considering turbine system 1 of Fig. 1, at step A, it is possible 1) to measure only acceleration of shaft 41 or 2) to measure only acceleration of shaft 51 or 3) to measure both accelerations and then, at step B, to use e.g. the product of both accelerations for calculating the flameout indicator. In fact, if the or each turbine downstream the combustor decelerates quickly, it is likely that flameout occurs.

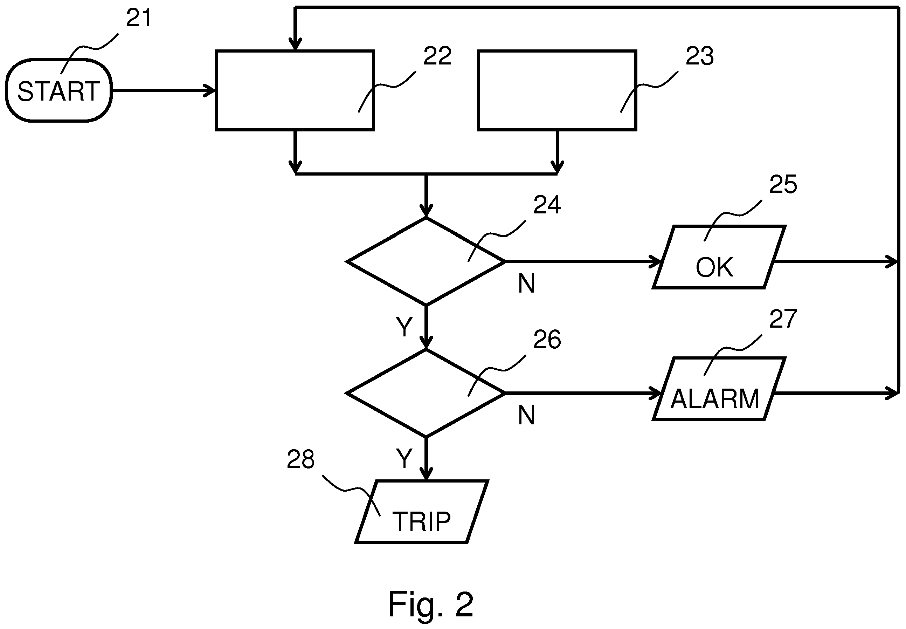

In the flowchart of Fig. 2, there is a block 21 corresponding to a START and a block 22 corresponding to steps A and B.

The threshold at step B is typically fixed and may be predetermined or variable. If the threshold is variable, it may depend on a current load state of the turbine system 1; in Fig. 2, block 23 corresponds to a pre-calculation of one or more thresholds based on measured operating parameters of the turbine system 1; for this purpose, "load state of a turbine system" may be considered the power generated by the turbine system. According to some embodiments, it has been experimentally determined that one fixed and predetermined value of 0.2 is adequate for the threshold across an entire load range.

In the flowchart of Fig. 2, two different thresholds (i.e. threshold-1 and threshold-2) are used (see block 24 and block 26); in particular, the first threshold is lower than the second threshold (i.e. threshold-1 < threshold-2). For most applications of the present invention, a single threshold is sufficient as it will be explained in the following.

In the flowchart of Fig. 2, block 24 corresponds to a comparison of the calculated flameout indicator with a first threshold (i.e. "is indicator > threshold-1 ?") and block 26 corresponds to a comparison of the calculated flameout indicator with a second threshold (i.e. "is indicator > threshold-2 ?"). A negative result N at block 24 indicates that combustor 3 is far from "flameout" and, subsequently to step C, "OK" is signaled at block 25; for example, digital signal processing unit 6 may send an ok signal to a remote monitoring unit or send no signal at all. A positive result Y at block 24 may indicate that combustor 3 is either close to "flameout" or at "flameout". A negative result N at block 26 indicates that combustor 3 is close to "flameout" and, subsequently to step C, "ALARM" is signaled at block 27 (that may correspond to a step D); for example, digital signal processing unit 6 may send an alarm signal to a remote monitoring unit. A positive result Y at block 26 indicates that combustor 3 is at "flameout" and, subsequently to step C, "TRIP" of turbine system 1 (i.e. switching-off) is carried at block 28 (that may correspond to a step D).

After blocks 25 and 27, the flow returns to block 22. This means that the "flameout indicator" is calculated repeatedly, in particular periodically; more precisely, at least steps A, B and C are cyclically repeated in time. The average repetition period may be in the range from e.g. 10 mS to e.g. 1000 mS.

It is to be noted that, according to a flowchart alternative to the one of Fig. 2, blocks 26 and 27 are not present, i.e. there is only one threshold, the turbine system is either considered "OK" or at "flameout", and at "flameout" the turbine system is simply switched-off.

It is to be noted that, according to a flowchart alternative to the one of Fig. 2, block 26 is not present and block 25 is located immediately before or after block 27, i.e. there is only one threshold, the turbine system is either considered "OK" or at "flameout", and at "flameout" an alarm is signaled and the turbine system is switched-off.

According to the embodiments just described, as soon as a threshold is reached an action is taken.

Alternatively, it may be provided that an action is taken only after a predetermined time or after a predetermined number of "consecutive positive results". For example referring to Fig. 2, if the average repetition period is 20 mS, it may be provided that "ALARM" is signaled after e.g. 1 or 2 consecutive positive results from the comparison at block 24 (corresponding approximately to 20 or 40 mS) and/or that "TRIP" occurs after e.g. 4 or 5 consecutive positive results from the comparison at block 26 (corresponding approximately to 80 or 100 mS). This means, in particular, that TRIP is decided only if deceleration proceeds for some (short) time.

A formula that is used at step B is the following:

$$-A * Pth/p$$

wherein "A" is an acceleration, "p" is a pressure and "Pth" is a "thermal power".

As already explained, "A" is the measured angular acceleration of the shaft of the first turbine or the measured angular acceleration of the shaft of the second/last turbine or the product of these angular accelerations, i.e. A1 or A2 or A1 * A2.

"p" is a pressure measured at an outlet of a compressor of the turbine system; referring to Fig. 2, it may be the average pressure measured at the outlet of compressor 2. This parameter is used to take into account any effect on the combustor due to any reduction of oxidant pressure (typically air pressure) provided to the combustor.

"Pth" is a parameter related to the thermal power generated by the combustor and is used to take into account any deceleration of the or each turbine which is desired or normal; for this purpose, "thermal power generated by a combustor" may be considered the fuel flow rate multiplied by its calorific value. For example, the or each turbine decelerates in case of "load rejection" or "full load rejection".

Preferably, "Pth" is the thermal power generated by the combustor calculated based on operating parameters of the turbine system.

More preferably, "Pth" is calculated as a function of an angular speed, a temperature, and optionally another angular speed. Referring to Fig. 1, the angular speed is measured at shaft 41 of turbine 4, the temperature is measured at an outlet of turbine 4 or, preferably, turbine 5, the other angular speed is measured at shaft 51 of turbine 5.

The formula -A * Pth/p allows a very precise estimation of "flameout".

The flameout detection method according to the subject matter disclosed herein may be used in a turbine system like the one of Fig. 1 or in a system similar thereto.

The turbine system comprises a digital signal processing unit adapted to carry out such flameout detection method; such unit typically comprises a software program for this purpose. In the embodiment of Fig. 1, such unit is labelled 6.

In order to carry out a flameout detection method, at least one detector is necessary, i.e. at least an angular acceleration detector (with reference to Fig. 1, detector 44 and/or detector 54); preferably, at least at least one angular accelerator detector (with reference to Fig. 1, detector 44 and/or detector 54) and at least one pressure detector (with reference to Fig. 1, detector 22) are used; more preferably, several detectors are used (with reference to Fig. 1, detectors 22, 42, 43, 44, 52, 53, 54).

The flameout detection method according to the subject matter disclosed herein allows to reliably and precisely and quickly detect flameout without any flame detector located just inside the combustion chamber of the combustor. In any case, the detection result from a flame detector may be used as a further safety measure.

The flameout detection method according to the subject matter disclosed herein allows to reliably and precisely and quickly detect flameout through the use of components (in particular sensors/detectors) that are normally already present in the turbine system for other purposes.

It is to be noted that a detection arrangement according to the subject matter disclosed herein may be specialised for a particular model of turbine system and/or may be calibrated before its use in an installed sample of turbine system. One parameter that requires particular care is the value of the or each threshold.

## Claims

1. A method of detecting flameout in a combustor (3) of a turbine system (1), wherein the turbine system (1) comprises a compressor (2) upstream said combustor (3) and a turbine (4, 5) downstream said combustor (3), the method comprising the steps of:

   A) measuring angular acceleration of a shaft (41, 51) of said turbine (4, 5);
   B) calculating a flameout indicator as a function of said measured angular acceleration, a pressure measured at an outlet of said compressor (2), and a thermal power generated by said combustor (3); and
   C) carrying out a comparison between said flameout indicator and a threshold, said threshold depending on a load state of the turbine system (1);
   **characterised in that**
   at step B said flameout indicator is calculated according to the formula:

   $$-A * Pth/p$$

   in which formula

   - $A$ is the measured angular acceleration of the shaft (41, 51) of the turbine (4, 5), if the turbine decelerates,

   $Pth$ is the calculated thermal power generated by the combustor (3), and p is the pressure measured at an outlet of the compressor (2).

2. The method of claim 1, wherein a positive result of said comparison indicates flameout.

3. The method of claim 1 or claim 2, wherein steps A, B and C are cyclically repeated in time, and wherein a set of consecutive positive results of said comparison indicates flameout.

**4.** The method of claim 3, wherein the average repetition period is in the range from 10 mS to 1000 mS.

**5.** The method of any of the preceding claims, comprising a step D of signaling an alarm, to be carried after step C.

**6.** The method of claim 5, wherein at step C a first threshold is used.

**7.** The method of any of the preceding claims, comprising a step E of tripping said turbine system, to be carried after step C or step D.

**8.** The method of claim 7, wherein at step C a second threshold is used.

**9.** The method of any of the preceding claims, wherein said thermal power is calculated as a function of an angular speed and a temperature, wherein said angular speed is measured at the shaft (41, 51) of said turbine (4, 5) and wherein said temperature is measured at an outlet of said turbine (4, 5).

**10.** The method of any of claims 1 to 9, wherein the turbine system (1) comprises a first turbine (4) and a second turbine (5), wherein an outlet of the first turbine (4) is fluidly connected to an inlet of the second turbine (5), wherein at step A at least one of a first angular acceleration of a shaft (41) of the first turbine (4) and a second angular acceleration of a shaft (51) of the second turbine (5) is measured, and wherein at step B said flameout indicator is calculated as a function of at least one of said first and said second angular acceleration.

**11.** The method of claim 10, wherein said thermal power is calculated as a function of a first angular speed, a temperature, and a optionally a second angular speed, wherein said first angular speed is measured at the shaft (41) of the first turbine (4), wherein said temperature is measured at an outlet of the first turbine (4) or the second turbine (5), and wherein said second angular speed is measured at the shaft (51) of the second turbine (5).

**12.** The method of claim 10 or 11, wherein at step B said flameout indicator is calculated according to the formula:

$$-A1 * Pth/p$$

or the formula:

$$-A2 * Pth/p$$

or the formula:

$$-A1 * A2 * Pth/p$$

wherein A1 is the measured angular acceleration of the shaft (41) of the first turbine (4), A2 is the measured acceleration of the shaft (51) of the second turbine (5), Pth is the calculated thermal power generated by the combustor (3) and p is the pressure measured at an outlet of the compressor (2).

**13.** A turbine system (1) comprising a compressor (2), a combustor (3) downstream of said compressor (2), a turbine (4, 5) downstream of said combustor (3); and further comprising:

- an angular acceleration detector (44, 54) associated to a shaft (41, 51) of said turbine (4, 5);
- at least one detector (22, 42, 43, 52, 53) of a pressure detector (22) and of a group of at least two detectors (42, 43, 52, 53), wherein a first of the two detectors is a temperature detector (42, 52) associated to an outlet of the turbine (4, 5) and a second is an angular speed detector (43, 53) associated to the shaft (41, 51) of the turbine (4, 5);
- a digital signal processing unit (6) receiving measure signals from all detectors (22, 42, 43, 44, 52, 53, 54) and adapted to carry out the method according to any of the preceding claims.

**14.** The turbine system (1) of claim 13, in which the turbine system (1) comprises a first turbine (4) and a second turbine (5), wherein an outlet of the first turbine (4) is fluidly connected to an inlet of the second turbine (5), in which the temperature detector (42, 52) is associated to an outlet of the first (4) or the second turbine (5) and the angular speed detector (43, 53) is associated to a shaft (41) of the first (4) or to the shaft (51) of the second turbine (5).

**Patentansprüche**

**1.** Verfahren zum Detektieren eines Flammabrisses in einer Brennkammer (3) eines Turbinensystems (1), wobei das Turbinensystem (1) einen Verdichter (2) stromaufwärts der Brennkammer (3) und eine Turbine (4, 5) stromabwärts der Brennkammer (3) umfasst, wobei das Verfahren die Schritte umfasst:

A) Messen der Winkelbeschleunigung einer Welle (41, 51) der Turbine (4, 5);
B) Berechnen eines Flammabrissindikators in Abhängigkeit von der gemessenen Winkelbeschleunigung, einem an einem Auslass des Verdichters (2) gemessenen Druck und einer von der Brennkammer (3) erzeugten Wärmeleistung; und

C) Durchführen eines Vergleichs zwischen dem Flammabrissindikator und einem Schwellenwert, wobei der Schwellenwert von einem Lastzustand des Turbinensystems (1) abhängig ist;

**dadurch gekennzeichnet, dass**

in Schritt B der Flammabrissindikator gemäß der folgenden Formel berechnet wird:

$$- A * Pth/p$$

wobei in der Formel

- $A$ die gemessene Winkelbeschleunigung der Welle (41, 51) der Turbine (4, 5) ist, wenn die Turbine abbremst,

$Pth$ die berechnete Wärmeleistung ist, die von der Brennkammer (3) erzeugt wird, und p der Druck ist, der an einem Auslass des Verdichters (2) gemessen wird.

2. Verfahren nach Anspruch 1, wobei ein positives Ergebnis des Vergleichs einen Flammabriss angibt.

3. Verfahren nach Anspruch 1 oder 2, wobei die Schritte A, B und C im Zeitverlauf zyklisch wiederholt werden und wobei ein Satz aufeinander folgender positiver Ergebnisse des Vergleichs einen Flammabriss angibt.

4. Verfahren nach Anspruch 3, wobei die durchschnittliche Wiederholungsdauer im Bereich von 10 mS bis 1000 mS liegt.

5. Verfahren nach einem der vorstehenden Ansprüche, umfassend einen Schritt D des Signalisierens eines Alarms, der nach Schritt C durchzuführen ist.

6. Verfahren nach Anspruch 5, wobei in Schritt C ein erster Schwellenwert verwendet wird.

7. Verfahren nach einem der vorstehenden Ansprüche, umfassend einen Schritt E des Ausschaltens des Turbinensystems, der nach Schritt C oder Schritt D durchzuführen ist.

8. Verfahren nach Anspruch 7, wobei in Schritt C ein zweiter Schwellenwert verwendet wird.

9. Verfahren nach einem der vorstehenden Ansprüche, wobei die Wärmeleistung in Abhängigkeit von einer Winkelgeschwindigkeit und einer Temperatur berechnet wird, wobei die Winkelgeschwindigkeit an der Welle (41, 51) der Turbine (4, 5) gemessen wird und wobei die Temperatur an einem Auslass der Turbine (4, 5) gemessen wird.

10. Verfahren nach einem der Ansprüche 1 bis 9, wobei das Turbinensystem (1) eine erste Turbine (4) und eine zweite Turbine (5) umfasst, wobei ein Auslass der ersten Turbine (4) fluidtechnisch mit einem Einlass der zweiten Turbine (5) verbunden ist, wobei in Schritt A mindestens eine von einer ersten Winkelbeschleunigung einer Welle (41) der ersten Turbine (4) und einer zweiten Winkelbeschleunigung einer Welle (51) der zweiten Turbine (5) gemessen wird, und wobei in Schritt B der Flammabrissindikator in Abhängigkeit von mindestens einer der ersten und der zweiten Winkelbeschleunigung berechnet wird.

11. Verfahren nach Anspruch 10, wobei die Wärmeleistung in Abhängigkeit von einer ersten Winkelgeschwindigkeit, einer Temperatur und optional einer zweiten Winkelgeschwindigkeit berechnet wird, wobei die erste Winkelgeschwindigkeit an der Welle (41) der ersten Turbine (4) gemessen wird, wobei die Temperatur an einem Auslass der ersten Turbine (4) oder der zweiten Turbine (5) gemessen wird, und wobei die zweite Winkelgeschwindigkeit an der Welle (51) der zweiten Turbine (5) gemessen wird.

12. Verfahren nach Anspruch 10 oder 11, wobei in Schritt B der Flammabrissindikator gemäß der folgenden Formel berechnet wird:

$$—A1 * Pth/p$$

oder der Formel:

$$—A2 * Pth/p$$

oder der Formel:

$$—A1 * A2 * Pth/p$$

wobei A1 die gemessene Winkelbeschleunigung der Welle (41) der ersten Turbine (4) ist, A2 die gemessene Beschleunigung der Welle (51) der zweiten Turbine (5) ist, Pth die berechnete Wärmeleistung ist, die durch die Brennkammer (3) erzeugt wird, und p der an einem Auslass des Verdichters (2) gemessene Druck ist.

13. Turbinensystem (1), umfassend einen Verdichter (2), eine Brennkammer (3) stromabwärts des Verdichters (2), eine Turbine (4, 5) stromabwärts der Brennkammer (3); und ferner umfassend:

- einen Winkelbeschleunigungsdetektor (44, 54), der einer Welle (41, 51) der Turbine (4, 5) zugeordnet ist;

- mindestens einen Detektor (22, 42, 43, 52, 53) von einem Druckdetektor (22) und einer Gruppe von mindestens zwei Detektoren (42, 43, 52, 53), wobei ein erster der zwei Detektoren ein Temperaturdetektor (42, 52) ist, der einem Auslass der Turbine (4, 5) zugeordnet ist, und ein zweiter ein Winkelgeschwindigkeitsdetektor (43, 53) ist, der der Welle (41, 51) der Turbine (4, 5) zugeordnet ist;

- eine digitale Signalverarbeitungseinheit (6), die Messsignale von allen Detektoren (22, 42, 43, 44, 52, 53, 54) empfängt und angepasst ist, um das Verfahren nach einem der vorstehenden Ansprüche durchzuführen.

14. Turbinensystem (1) nach Anspruch 13, in dem das Turbinensystem (1) eine erste Turbine (4) und eine zweite Turbine (5) umfasst, wobei ein Auslass der ersten Turbine (4) fluidtechnisch mit einem Einlass der zweiten Turbine (5) verbunden ist, in dem der Temperaturdetektor (42, 52) einem Auslass der ersten (4) oder der zweiten Turbine (5) zugeordnet ist und der Winkelgeschwindigkeitsdetektor (43, 53) einer Welle (41) der ersten (4) oder der Welle (51) der zweiten Turbine (5) zugeordnet ist.

## Revendications

1. Procédé de détection d'extinction dans une chambre de combustion (3) d'un système de turbine (1), dans lequel le système de turbine (1) comprend un compresseur (2) en amont de ladite chambre de combustion (3) et une turbine (4, 5) en aval de ladite chambre de combustion (3), le procédé comprenant les étapes consistant à :

A) mesurer une accélération angulaire d'un arbre (41, 51) de ladite turbine (4, 5) ;
B) calculer un indicateur d'extinction en fonction de ladite accélération angulaire mesurée, une pression mesurée au niveau d'une sortie dudit compresseur (2), et une puissance thermique générée par ladite chambre de combustion (3) ; et
C) réaliser une comparaison entre ledit indicateur d'extinction et un seuil, ledit seuil dépendant d'un état de charge du système de turbine (1) ;

**caractérisé en ce que**
au niveau de l'étape B ledit indicateur d'extinction est calculé selon la formule :

$$-A * Pth/p$$

où dans la formule

- $A$ est l'accélération angulaire mesurée de l'arbre (41, 51) de la turbine (4, 5), si la turbine décélère,

$Pth$ est la puissance thermique calculée générée par la chambre de combustion (3), et p est la pression mesurée au niveau d'une sortie du compresseur (2).

2. Procédé selon la revendication 1, dans lequel un résultat positif de ladite comparaison indique une extinction.

3. Procédé selon la revendication 1 ou la revendication 2, dans lequel les étapes A, B et C sont répétées de manière cyclique dans le temps, et dans lequel un ensemble de résultats positifs consécutifs de ladite comparaison indique une extinction.

4. Procédé selon la revendication 3, dans lequel le laps de temps de répétition moyen est dans la plage allant de 10 ms à 1 000 ms.

5. Procédé selon l'une quelconque des revendications précédentes, comprenant une étape D de signalement d'une alarme, à réaliser après l'étape C.

6. Procédé selon la revendication 5, dans lequel au niveau de l'étape C un premier seuil est utilisé.

7. Procédé selon l'une quelconque des revendications précédentes, comprenant une étape E de déclenchement dudit système de turbine, à réaliser après l'étape C ou l'étape D.

8. Procédé selon la revendication 7, dans lequel au niveau de l'étape C un second seuil est utilisé.

9. Procédé selon l'une quelconque des revendications précédentes, dans lequel ladite puissance thermique est calculée en fonction d'une vitesse angulaire et d'une température, dans lequel ladite vitesse angulaire est mesurée au niveau de l'arbre (41, 51) de ladite turbine (4, 5) et dans lequel ladite température est mesurée au niveau d'une sortie de ladite turbine (4, 5).

10. Procédé selon l'une quelconque des revendications 1 à 9, dans lequel le système de turbine (1) comprend une première turbine (4) et une seconde turbine (5), dans lequel une sortie de la première turbine (4) est fluidiquement reliée à une entrée de la seconde turbine (5), dans lequel au niveau de l'étape A au moins l'une d'une première accélération angulaire d'un arbre (41) de la première turbine (4) et d'une seconde accélération angulaire d'un arbre (51) de la seconde turbine (5) est mesurée, et dans lequel au niveau de l'étape B ledit indicateur d'extinction est calculé en fonction d'au moins l'une de ladite première et de ladite seconde accélération angulaire.

**11.** Procédé selon la revendication 10, dans lequel ladite puissance thermique est calculée en fonction d'une première vitesse angulaire, d'une température, et d'une éventuellement seconde vitesse angulaire, dans lequel ladite première vitesse angulaire est mesurée au niveau de l'arbre (41) de la première turbine (4), dans lequel ladite température est mesurée au niveau d'une sortie de la première turbine (4) ou de la seconde turbine (5), et dans lequel ladite seconde vitesse angulaire est mesurée au niveau de l'arbre (51) de la seconde turbine (5).

**12.** Procédé selon la revendication 10 ou 11, dans lequel au niveau de l'étape B ledit indicateur d'extinction est calculé selon la formule :

$$-A1 * Pth/p$$

ou la formule :

$$-A2 * Pth/p$$

ou la formule :

$$-A1 * A2 * Pth/p$$

dans lequel A1 est l'accélération angulaire mesurée de l'arbre (41) de la première turbine (4), A2 est l'accélération mesurée de l'arbre (51) de la seconde turbine (5), Pth est la puissance thermique calculée générée par la chambre de combustion (3) et p est la pression mesurée au niveau d'une sortie du compresseur (2).

**13.** Système de turbine (1) comprenant un compresseur (2), une chambre de combustion (3) en aval dudit compresseur (2), une turbine (4, 5) en aval de ladite chambre de combustion (3) ; et comprenant en outre :

- un détecteur d'accélération angulaire (44, 54) associé à un arbre (41, 51) de ladite turbine (4, 5) ;
- au moins un détecteur (22, 42, 43, 52, 53) d'un détecteur de pression (22) et d'un groupe d'au moins deux détecteurs (42, 43, 52, 53), dans lequel un premier des deux détecteurs est un détecteur de température (42, 52) associé à une sortie de la turbine (4, 5) et un second est un détecteur de vitesse angulaire (43, 53) associé à l'arbre (41, 51) de la turbine (4, 5) ;
- une unité de traitement de signal numérique (6) recevant des signaux de mesure de tous les détecteurs (22, 42, 43, 44, 52, 53, 54) et adaptée pour réaliser le procédé selon l'une quelconque des revendications précédentes.

**14.** Système de turbine (1) selon la revendication 13, dans lequel le système de turbine (1) comprend une première turbine (4) et une seconde turbine (5), dans lequel une sortie de la première turbine (4) est fluidiquement reliée à une entrée de la seconde turbine (5), dans lequel le détecteur de température (42, 52) est associé à une sortie de la première (4) ou de la seconde turbine (5) et le détecteur de vitesse angulaire (43, 53) est associé à un arbre (41) de la première (4) ou à l'arbre (51) de la seconde turbine (5).

Fig. 1

EP 3 376 004 B1

Fig. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6442943 B1